# EUROPÄISCHE PATENTANMELDUNG

(11) **EP 2 390 032 A2**
(43) Veröffentlichungstag der Anmeldung: **30.11.2011**
(21) Anmeldenummer: 11168047.6
(22) Anmeldetag: 30.05.2011
(51) Int. Cl.: B23C 3/35, B23Q 7/02, B23Q 39/04

(54) **Verfahren und Vorrichtung zum Fertigen von Flachschlüsseln**

(30) Priorität: 31.05.2010 DE 102010017164
(71) Anmelder: C. Ed. Schulte Gesellschaft mit beschränkter Haftung Zylinderschlossfabrik, 42551 Velbert (DE)
(72) Erfinder: Schiller, Tobias, 42549 Velbert (DE); Thaumiller, Valentin, 42579 Heiligenhaus (DE)
(74) Vertreter: Grundmann, Dirk

(57) **Zusammenfassung**

Die Erfindung betrifft eine Vorrichtung zum Fertigen von Flachschlüsseln mit einer mindestens eine Spannbackenanordnung (4, 5) zur Halterung eines Schlüsselrohlings (1) aufweisenden, gegenüber dem Maschinengestell (2) verlagerbaren Spanneinrichtung (3) und einer Antriebseinrichtung (6) mit einem Spannfutter (7) zur Aufnahme eines Profilfräsers (8), insbesondere Schaft- oder Scheibenfräsers zur Breitseitenprofilierung des Schlüsselrohlings (1). Um Schlüssel in großer Vielfalt und verschiedene Profilvarianten herzustellen, wird vorgeschlagen, dass die Vorrichtung ein mindestens drei CNC-gesteuerte Achsen aufweisendes Bearbeitungszentrum ist, in dem sowohl die Breitseitenprofilierung als auch die durch schlüsselbrustseitige Einschnitte oder Bohrmulden in die Schlüsselbreitseite verkörperte Schließindividualisierung gefertigt wird. Die Erfindung betrifft darüber hinaus ein Verfahren zur Herstellung von Flachschlüsseln mit einer derartigen Vorrichtung.

## Beschreibung

Die Erfindung betrifft eine Vorrichtung zum Fertigen von Flachschlüsseln mit einer mindestens eine Spannbackenanordnung zur Halterung eines Schlüsselrohlings aufweisenden, gegenüber dem Maschinengestell verlagerbaren Spanneinrichtung und einer Antriebseinrichtung mit einem Spannfutter zur Aufnahme eines Profilfräsers, insbesondere Schaft- oder Scheibenfräsers zur Breitseitenprofilierung des Schlüsselrohlings, wobei die Vorrichtung ein mindestens drei CNC-gesteuerte Achsen aufweisendes Beabreitungszentrum ist, um zumindest die Breitseitenprofilierung zu fertigen.

Die Erfindung betrifft darüber hinaus ein Verfahren zur Herstellung von Flachschlüsseln mit einer derartigen Vorrichtung.

Die DE 10031713 A1 beschreibt eine Vorrichtung zur Herstellung von Schlüsselrohlingen mit einer individuellen Breitseitenprofilierung. Die Profilnuten werden mit Hilfe von Scheibenfräsern in den Schlüsselschaft eingefräst. Der Schlüsselschaft wird hierzu in einer Spannbackenanordnung gehalten. Eine Antriebseinrichtung mit Spannfutter zur Aufnahme des Fräsers lässt sich in verschiedenen Raumrichtungen verlagern.

Die WO02/101180 beschreibt eine Vorrichtung zum Einfräsen der die Schließindividualisierung verkörpernden Einschnitte in eine Schlüsselschmalseite.

Die CN 201157924Y beschreibt ebenfalls eine Vorrichtung zum Einschneiden der schlüsselbrustseitigen Schließcodierungen in einen Schlüsselschaft.

Aus der DE 100 49 662 C2 ist eine Vorrichtung und ein Verfahren zum Wälzfräsen des variablen Längsprofils von Schlüsseln für Schließzylinder bekannt. Der Fräser trägt eine Vielzahl von Frässegmenten.

Die DE 103 41627 A1 beschreibt eine Spannvorrichtung für Schaftschlüssel, wobei die beiden voneinander wegweisenden Schlüsselbreitseiten des Schlüssels zwischen zwei Spannbacken eingespannt werden.

Die DE 10 2007 057407 A1 beschreibt eine Maschine und ein Verfahren zum Fräsen des Längsprofils der Schäfte von Flachschlüsselrohlingen, mit einem Maschinengestell, in dem eine drehangetriebene Fräswelle gelagert ist und an dem eine verfahrbare Spanneinrichtung vorgesehen ist.

Aus der DE 198 51 815 A1 ist ein Verfahren zum Herstellen von Schlüsseln bekannt, bei dem die Schlüssel mit ihren voneinander wegweisenden Breitseiten eingespannt werden und mit Schließkerben versehen werden.

Die DE 43 31393 C1 beschreibt ebenfalls eine Vorrichtung zur Schmalseitenprofilierung eines Schlüssels, mit der unterschiedlich tiefe Brusteinschnitte in den Schlüsselrohling eingebracht werden können.

Auf dem Markt sind im Wesentlichen zwei unterschiedliche Typen von Flachschlüsseln in Verwendung. Bei dem sogenannten Wendeschlüssel besitzen die voneinander wegweisenden Breitseitenflächen des Schlüsselschaftes ein gleichgestaltetes Querschnittsprofil, so dass die Schlüssel wahlweise in um 180° um die Schlüssellängsachse verschwenkten Stellungen in den Schlüsselkanal eines Schließzylinders eingeschoben werden können. Zur Erhöhung der Variationsvielfalt der Schlüssel besitzen Schlüssel zu unterschiedlichen Schließanlagen bzw. mit einer unterschiedlichen Schließhierarchie verschieden gestaltete Querschnittsprofile. Die Querschnittsprofile zeichnen sich durch sich abwechselnde Rippen und Nuten aus, wobei die Rippen verschiedene Rippenhöhen und die Nuten verschiedene Nuttiefen aufweisen können. In die Schlüsselbreitseiten sind muldenförmige Codiervertiefungen eingearbeitet. Diese Vertiefungen werden bspw. gebohrt. Die Vertiefungen haben unterschiedliche Tiefen. Damit wird das Schlüsselgeheimnis festgelegt. Im zugehörigen Schließzylinder befinden sich Stiftzuhaltungen, mit denen die Codiervertiefungen abgetastet werden, so dass nur ein Schlüssel mit dem passenden Querschnittsprofil und einer passenden Muldenprofilierung den Schließzylinder schließen kann.

Von diesen Wendeschlüsseln unterscheiden sich brustseitig eingeschnittene Flachschlüssel. Diese können auf den beiden voneinander wegweisenden Breitseiten unterschiedlich profiliert sein. Die Stiftzuhaltungen des zugehörigen Schließzylinders tasten bei diesem Schlüssel unterschiedlich tief eingeschnittene Kerben ab, die in die Schlüsselschmalseite eingeschnitten sind.

Der Erfindung liegt die Aufgabe zugrunde, eine Herstellungsmaschine bzw. ein Herstellungsverfahren anzugeben, mit dem eine große Vielfalt von Schlüsseln und insbesondere Profilvarianten hergestellt werden können.

Gelöst wird die Aufgabe durch die in den Ansprüchen angegebene Erfindung. Der Anspruch 1 sieht vor, dass die Spanneinrichtung eine vertikale Schwenkachse aufweist, um die mehreren, revolverartig um die Schwenkachse angeordneten Spannbackenanordnungen zwischen verschiedenen Betriebsstellungen zu verschwenken. Ferner ist vorgesehen, dass auf derselben Vorrichtung auch die durch schlüsselbrustseitige Einschnitte oder Bohrmulden in die Schlüsselbreitseite verkörperten Schließindividualisierungen gefertigt werden. Nach einem ersten Aspekt der Erfindung ist vorgesehen, dass zur Komplettbearbeitung eines Schlüssels ein Standard-Bearbeitungszentrum verwendet wird. Ein derartiges Standard-Bearbeitungszentrum besitzt drei CNC-Achsen, bspw. um eine Antriebseinrichtung für einen Fräser bei in einer Raumrichtung festgehaltenen Drehachse in den drei Raumrichtungen zu verlagern. Alternativ kann ein Standard-Bearbeitungszentrum verwendet werden, bei dem die Antriebseinrichtung für den Fräser lediglich in zwei Raumrichtungen, bspw. in der vertikalen Z-Richtung und in einer horizontalen Y-Richtung verlagert werden kann. Das Maschinengestell besitzt dann einen in einer horizontalen X-Richtung verlagerbaren Tisch, auf dem die Spanneinrichtung angeordnet ist. Bei dieser Variation erfolgt die Zustellung durch eine Verlagerung des Fräsers. Der Vorschub erfolgt über die Linearverlagerung des Tisches in X-Richtung.

In einem weiteren Aspekt der Erfindung ist vorgesehen, dass die Spanneinrichtung eine Schwenkachse aufweist, um die mindestens eine Spannbackenanordnung von einer Be-/Entladestellung in eine Bearbeitungsstellung und / oder von einer ersten Bearbeitungsstellung in eine zweite Bearbeitungsstellung schwenkbar ist, wobei die Antriebseinrichtung derart gegenüber dem Maschinengestell verlagerbar ist, dass eine Profilierung der Schlüsselbreitseite bei in der Arbeitsstellung ortsfest -bezogen auf das Maschinengestell- gehaltenen Schlüsselrohling durch einen Vorschub des Profilfräsers erfolgt. Der Vorschub kann alternativ auch durch eine Linearverlagerung der Spanneinrichtung erfolgen. Diese ist hierzu, wie oben bereits erwähnt, auf einem linear verlagerbaren Tisch des Maschinengestells befestigt. Die Spannbackenanordnung kann aus zwei von einer Antriebseinheit von einer Offenstellung in eine Geschlossenstellung verlagerbaren Spannbacken gebildet sein. Von den beiden Spannbacken kann eine Spannbacke fest gegenüber der Spanneinrichtung sein. An diese feste Spannbacke wird der Rücken des Schlüsselschaftes angelegt. Mit der beweglichen Spannbacke wird der Schlüssel gegen die feste Spannbacke gedrückt. Es können aber auch Zentrumsspanner vorgesehen sein, um bspw. einen Wende-Flachschlüssel zu profilieren, dessen Breitseiten in einem späteren Verfahrensschritt Bohrmulden erhält. Die beiden Spannbacken bilden aufeinander zu weisende Spannflächen, die den Schlüsselschaft zwischen sich einspannen, wobei die Spannflächen dann an den Schmalseiten des Schlüsselschaftes anliegen. Die Beladung der Spannbackenanordnung erfolgt bevorzugt von oben mittels eines Greifarmes. Dieser besitzt Greifzangen, die den Schlüssel und insbesondere den Schlüsselbart fassen können. Dieser besitzt Greifzangen, die den Schlüssel am Schlüsselkopf fassen können, um so den Rohling in wahlweise um 180° gewendeten Stellungen zwischen die Spannbacken zu legen. Es ist aber auch vorgesehen, dass die Greifzangen den Schlüssel am Schlüsselbart fassen können. Die Schlüsselrohlinge werden dabei mittels des Greifarmes einem Magazin oder einer anderen Bevorratungseinrichtung entnommen. Die Spannbacken sitzen bevorzugt an einem Spannbackenträger. Der Spannbackenträger kann eine Vielzahl von revolverartig, also in einer gleichmäßigen Winkelverteilung um die Schwenkachse angeordnete Spannbackenanordnungen aufweisen. Der Schwenkbackenträger wird nach dem Beladen mit einem Schlüsselrohling ggf. über Zwischenstellungen, in denen weitere Spannbackenanordnungen mit Schlüsselrohlingen beladen werden, in eine Bearbeitungsstellung verschwenkt. Es kann sich dabei um eine 90°-Schwenkung handeln. Es ist aber auch möglich, dass die Spannbackenanordnung lediglich um 30°, um 40° oder um einen anderen Winkel verschwenkt wird. In dieser verschwenkten Stellung nimmt eine der Spannbackenanordnungen eine Bearbeitungsstellung ein. Wird der Schwenkbackenträger um 90° verschwenkt, liegt der Schlüssel -bezogen auf die Schlüsselebene- in einer Vertikalstellung. Der Profilfräser besitzt eine Drehachse, die in der Vertikalen liegt. Bevorzugt verlaufen sämtliche Bearbeitungsvorgänge mit einer derartigen lotrecht verlaufenden Profilfräserachse ab, so dass die Antriebseinrichtung des Profilfräsers lediglich in den drei Raumrichtungen verlagert werden braucht. Ein Schwenken der Antriebseinrichtung ist nicht erforderlich. Um spiegelsymmetrische Profile der Schlüsselrohlinge zu fertigen, können die Rohlinge in zwei verschiedenen Ausrichtungen in der Spannbackenanordnung eingespannt werden. Die Spannbacken können hierzu zwei sich gegenüberliegende Ausnehmungen ausbilden, in die je nach Aufspannrichtung die Schlüsselreide liegt. Zum Profilieren der ersten Schlüsselbreitseite wird der Schlüsselrohling in eine Spannbackenanordnung gelegt, die eine ebene Auflagefläche aufweist. Die ebene Fläche des Schlüsselschaftes des Rohlings liegt in der ersten Aufspannstellung auf dieser Auflagefläche auf. Beim Spannen drückt ein Niederhalter auf die nach außen weisende Schlüsselbreitseite, um einen flächigen Kontakt zur Auflagefläche zu gewährleisten. Dies ist erforderlich, damit die Nuten die richtige Tiefe erhalten. Bei einem Wendeschlüssel, der auf beiden Breitseitenflächen dasselbe Profil trägt, wird die zweite Breitseitenfläche in derselben Bearbeitungsstellung des Fräsers bearbeitet. Jedoch wird der Schlüsselrohling vorher umgespannt. Hierzu wird der Schlüsselrohling mit der Greifzange am Schlüsselkopf gefasst und um 180° gewendet. Er wird in einer anderen Spannbacke eingespannt, die eine Auflagefläche aufweist, die ein zum Breitseitenprofil des Schlüssels konträres Profil aufweist. Dies stellt eine optimale Abstützung der bereits profilierten Schlüsselbreitseite auf der Auflagefläche sicher. Das Fräsen eines spiegelsymmetrischen Profils erfolgt in derselben Bearbeitungsstellung, allerdings mit einem um 180° gewendeten Schlüsselrohling. Von der Vielzahl der Spannbackenanordnungen besitzt bevorzugt lediglich eine eine Auflagefläche, die einer Ebene entspricht. In dieser Spannbackenanordnung können jeweils die ersten Breitseiten unterschiedlich gestalteter Profile profiliert werden. Zum Profilieren der jeweils anderen Schlüsselschaftbreitseite wird der einseitig profilierte Schlüsselrohling vom Greifer gefasst, um 180° um seine Schlüssellängsachse gewendet und in eine andere Spannbackenanordnung eingelegt, deren Auflagefläche dem Negativprofil der profilierten Breitseite entspricht. Es können fünf oder mehr weitere Spannbackenanordnungen vorgesehen sein, die jeweils unterschiedlich profilierte Auflageflächen aufweisen, so dass mit der Vorrichtung eine Vielzahl unterschiedlicher Profile gefräst werden kann, ohne dass die Spannbacken manuell gegen andere ausgetauscht werden müssen. Der Vorschub beim Profilfräsen erfolgt auch hier entweder über eine Horizontalverlagerung des die Spanneinrichtung tragenden Tisches oder durch eine Horizontalverlagerung des Profilfräsers. Mit der erfindungsgemäßen Maschine ist es darüber hinaus auch möglich, die von den Zuhaltungsstiften des zugehörigen Schließzylinders abgefragten Profilierungsausnehmungen, insbesondere Profilierungsmulden bzw. Kerbeinschnitte vorzunehmen. Hierzu ist eine zweite Spannbackenanordnung vorgesehen, mit der der Schlüssel bzw. der Schlüsselschaft gespannt werden kann. Zum Einschneiden von brustseitigen Kerbeinschnitten werden die beiden Breitseiten des Schlüsselschaftes eingespannt. Die Kerbprofilierung erfolgt mit einem Schneidrad. Die Bohrmulden, die zur Schließindividualisierung in Wendeflachschlüsseln eingebracht werden, werden mit der erfindungsgemäßen Vorrichtung bevorzugt mit einem Bohrwerkzeug oder einem Fingerfräser in die profilierten Breitseiten des Schlüsselschaftes eingearbeitet. Um diese, das Schlüsselgeheimnis des Schlüssels verkörpernden Bohrmulden einzubringen, wird der Fräser, der von der Antriebseinrichtung angetrieben wird, in einer Werkzeugwechseleinrichtung gegen einen entsprechenden Fingerfräser oder Bohrer ausgetauscht, so dass in einer weiteren Bearbeitungsstellung, in der insbesondere die Schlüsselbreitseitenebene in einer Horizontalebene liegt, die Bohrmulden gefertigt werden können. Sowohl das Fräswerkzeug als auch ein Schneidrad zum Fertigen der Kerbprofilierung können mit einer Entgratungsbürste versehen sein, um nach der spanabhebenden Bearbeitung Grate zu entfernen. Der Vorrichtung kann zusätzlich eine Prüfvorrichtung zugeordnet sein, mit der das Profil und die Einschnitte auf Maßhaltigkeit überprüft werden können. Zur Fertigung einer Vielzahl unterschiedlicher Profile kann das Fräswerkzeug gewechselt werden. Es ist aber auch möglich, einen Fräser zu verwenden, der eine Vielzahl axial übereinander angeordneter Frässegmente aufweist. Das Maschinengestell kann von einem handelsüblichen Bearbeitungszentrum verwirklicht werden. In diesem befindet sich eine um eine Vertikalachse drehbare Frässpindel, die einen Konturfräser trägt, der in den drei Raumrichtungen verlagert werden kann. Der Konturfräser braucht aber lediglich in zwei Richtungen verlagerbar zu sein, wenn das Maschinengestell einen in einer weiteren Richtung verlagerbaren Tisch aufweist, der die Spanneinrichtung trägt, so dass nicht nur das Werkzeug, sondern auch das Werkstück gegenüber dem Maschinengestell verlagerbar ist. Die Schlüsselrohlinge können von einem Transportsystem, bspw. von einem Kettenförderer, zur Bearbeitungsstation transportiert werden. Dort können sie von einem Greifer genommen und in einer Spannbackenanordnung fixiert werden.

Die eingangs genannte Aufgabe wird zudem dadurch gelöst, dass der Schlüsselrohling zur Fertigung spiegelsymmetrischer Profile in zumindest zwei voneinander verschiedenen Ausrichtungen in der Spannbackenanordnung spannbar ist, wobei die Schlüsselreiden in entgegengesetzte Richtung weisen.

Eine eigenständige Lösung der Aufgabe erfolgt auch dadurch, dass die Anlagefläche der Spannbackenanordnung eine zum Breitseitenprofil des Schlüssels konträre Profilierung aufweist.

Die eingangs genannte Aufgabe wird weiter dadurch eigenständig gelöst, dass die Spannbackenanordnung zwei aufeinander zu weisende Spannflächen aufweist, zwischen die der Schlüsselrohling mit einer Greifzange bringbar ist, so dass die Schmalseiten des Schlüsselbartes des Schlüsselrohlings gespannt werden, wobei ein Niederhalter vorgesehen ist, um die Schlüsselbreitseite gegen eine Auflagefläche während des Spannens zu drücken. Durch diese Weiterbildung wird gewährleistet, dass die Profilnuten immer dieselben Profiltiefen aufweisen.

Ein Ausführungsbeispiel der Erfindung wird nachfolgend anhand beigefügter Zeichnungen erläutert. Es zeigen:
- Fig. 1: eine schematische Breitseitenansicht der Vorrichtung mit einer Antriebseinrichtung, die über eine in der Vertikalen verlaufenden Antriebsachse einen Profilfräser treibt, der in zwei Raumrichtungen linear verlagerbar ist, und mit einer linear verlagerbaren Spanneinrichtung, welche Spannbacken aufweist, in die mittels eines Greifarmes ein Schlüsselrohling einlegbar ist,

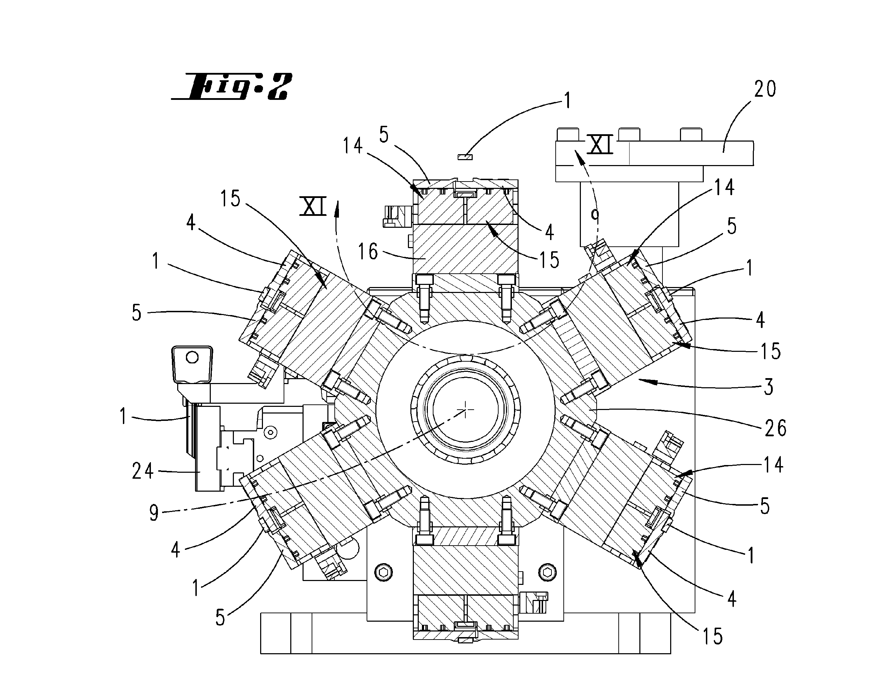

- Fig. 2: einen Schnitt gemäß der Linie II-II in der Beladestellung, in welcher eine oben liegende Spannbackenanordnung in einer Horizontalebene liegt,
- Fig. 3: eine Darstellung gemäß Fig. 2 in einer ersten Bearbeitungsstellung, in der eine Spannbackenanordnung, in der ein zu bearbeitender Rohling liegt, in einer Vertikalebene liegt,
- Fig. 4: eine Darstellung gemäß Fig. 2, in welcher die Bearbeitungsstellung auf der anderen Seite der Schwenkachse liegt,

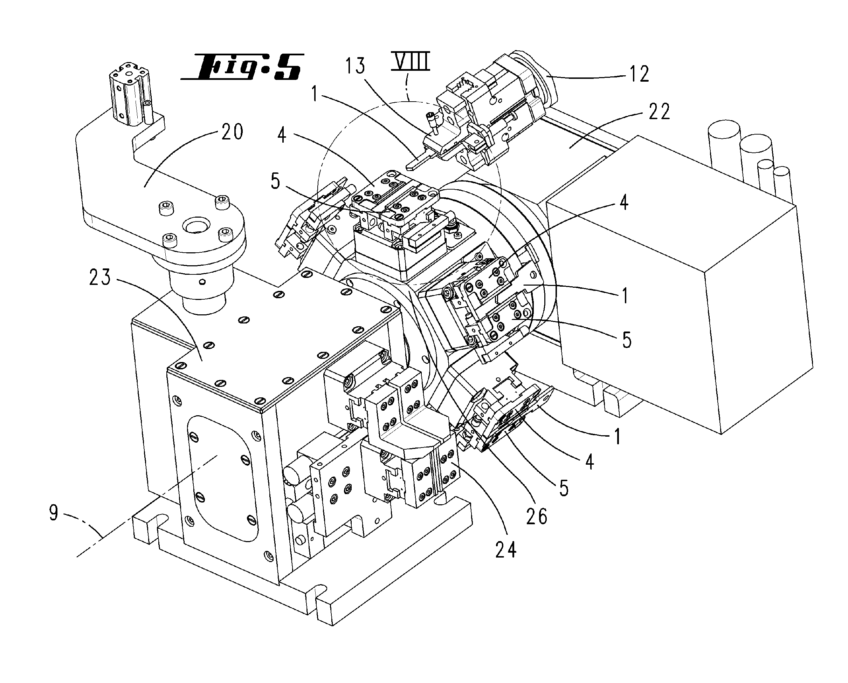

- Fig. 5: eine perspektivische Darstellung der Spanneinrichtung, die um eine Schwenkachse schwenkbar ist, die in zwei Gehäuseteilen gelagert ist.

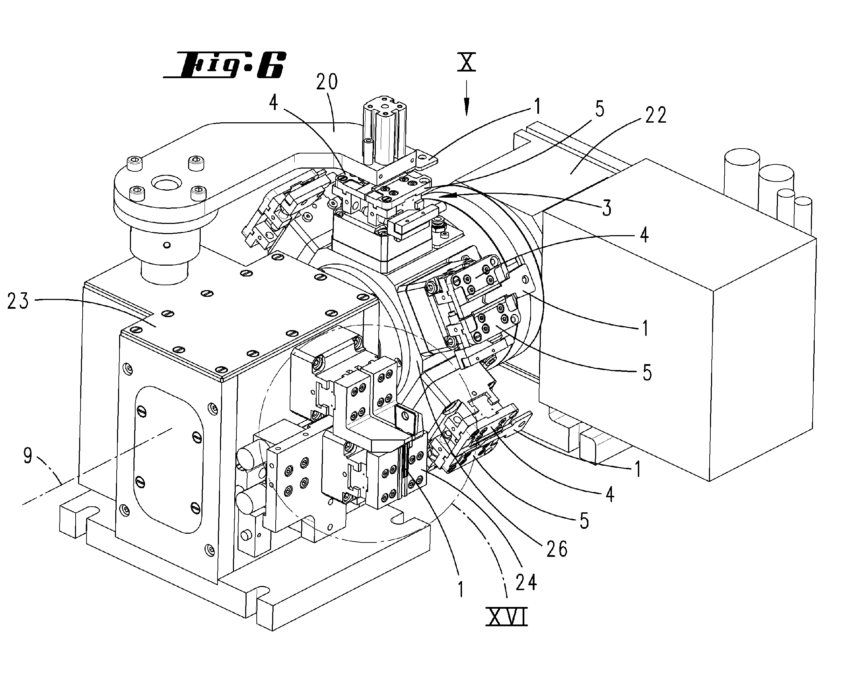

- Fig. 6: eine Darstellung gemäß Fig. 5, jedoch nach beladenem Rohling,

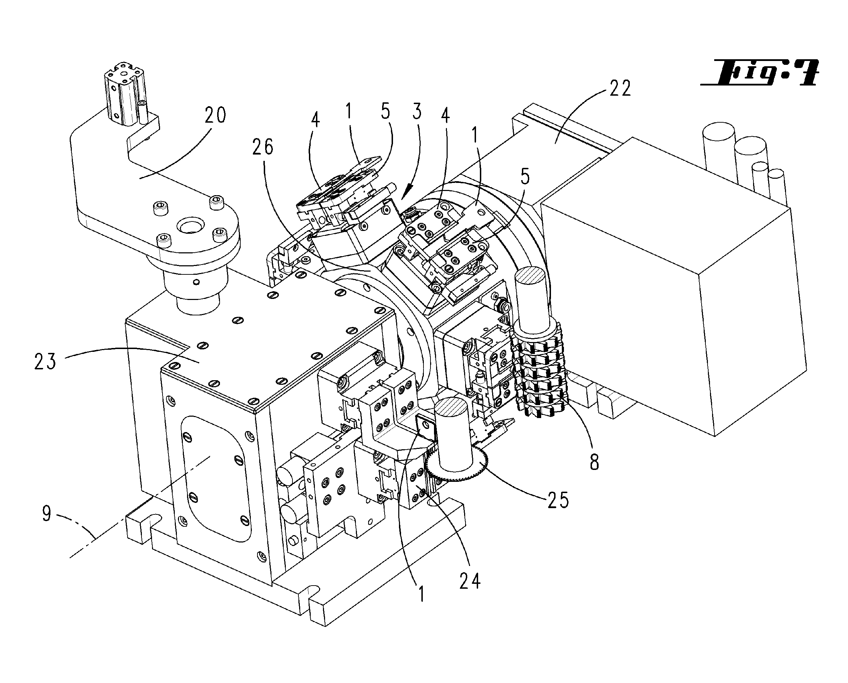

- Fig. 7: eine perspektivische Darstellung gemäß Fig. 1, jedoch in der ersten Bearbeitungsstellung gemäß Fig. 3,
- Fig. 8: einen vergrößerten Ausschnitt gemäß VIII in Fig. 5,
- Fig. 9: eine Darstellung wie Fig. 8, jedoch mit um 180° gewendetem Schlüssel, wie er in eine zweite Aufspannstellung bringbar ist,

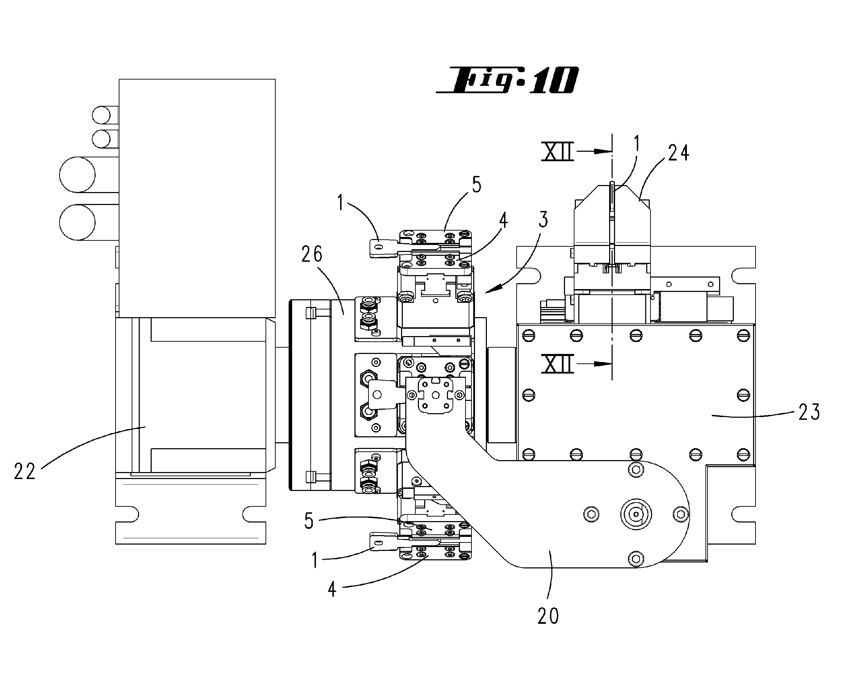

- Fig. 10: eine Draufsicht auf die Spanneinrichtung in der Beladestellung,
- Fig. 11: einen Schnitt durch die Spannbackenanordnung in der Beladestellung, vor dem Zufahren der Spannbacken,
- Fig. 12: eine Darstellung gemäß Fig. 11 zur Demonstration der Funktionsweise des Niederhalters,
- Fig. 13: eine Darstellung gemäß Fig. 12 mit zugefahrenen Spannbacken,
- Fig. 14: einen Ausschnitt aus Fig. 13, jedoch mit einer profilierten Auflagefläche, welche ein konträres Profil aufweist, wie die bereits profilierte Breitseite des Schlüsselrohlings, mit der der Schlüsselrohling auf der Auflagefläche liegt,
- Fig. 15: die Bearbeitungsstellung, in der ein Segment eines Profilfräsers im Eingriff in der Schlüsselschaftbreitseite ist,
- Fig. 16: perspektivisch die zweite Spannbackenanordnung zur Spannung der beiden Breitseiten des Schlüsselschaftes zur Schmalseitenprofilierung,
- Fig. 17: einen Schnitt parallel zur Schlüsselbreitseite in einer Spannstellung gemäß Fig. 16 und zusätzlich dargestelltem Schneidrad und
- Fig. 18: einen Schnitt gemäß der Linie XVIII-XVIII in Fig. 17 mit dem Schneidrad im Eingriff.

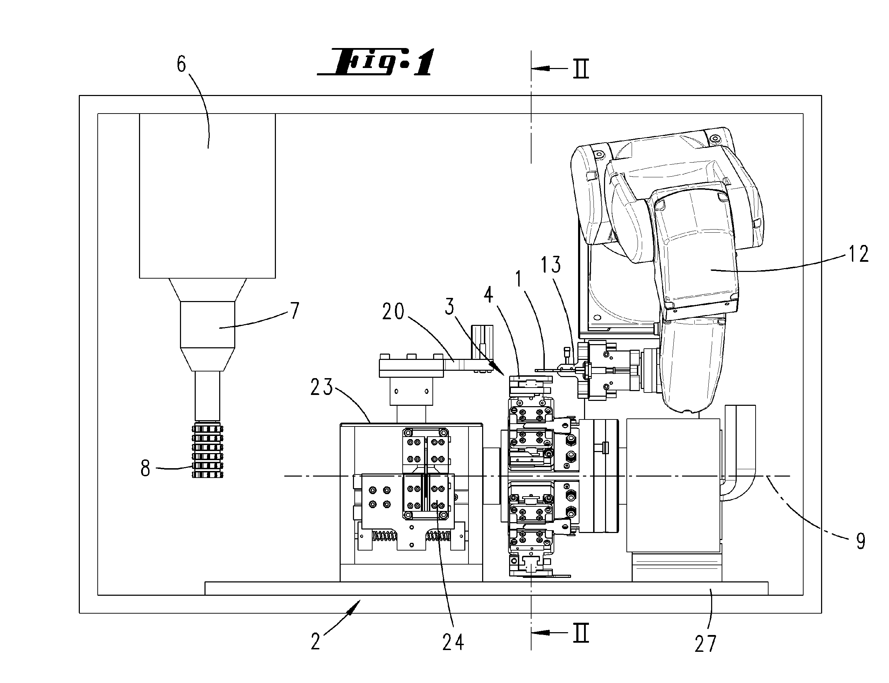

Das in der Fig. 1 dargestellte Maschinengestell 2 besteht im Wesentlichen aus einem Gehäuse, in dem eine Antriebseinrichtung 6 gelagert ist. Die Antriebseinrichtung 6 ist in der Lage, eine Antriebsachse, die in der Vertikalen liegt, drehanzutreiben. Die Antriebseinrichtung 6 ist in den zwei Raumrichtungen innerhalb des Maschinengehäuses verfahrbar. Die Antriebseinrichtung 6 kann aber auch in drei Raumrichtungen verfahrbar sein. Die Antriebseinrichtung 6 braucht aber nicht schwenkbar zu sein. Sie besitzt ein Spannfutter 7, mit dem ein Profilfräser 8 gehalten ist. Der Profilfräser 8 kann eine Vielzahl in Achsrichtung nebeneinanderliegender Frässcheiben 21 aufweisen, die ein unterschiedliches Umfangsprofil besitzen, so dass mit je einer Frässcheibe 21 ein anderes Schlüsselschaftbreitseitenprofil in den Schlüsselschaft 11 eines Rohlings eingearbeitet werden kann.

Mittels eines Greifarms 12 kann ein Rohling 1 aus einem Magazin oder von einem Transportsystem, bspw. einem Kettenförderer, genommen werden. Der Greifarm 12 ist am Maschinengestell 2, bspw. am Gehäuse, befestigt und besitzt einen mehrgliedrigen Arm, der an seinem Ende eine Greifzange 13 trägt.

Am Maschinengestell 2 ist eine Spanneinrichtung 3 befestigt. Die Spanneinrichtung 3 befindet sich auf einem Tisch 27, der ortsfest am Maschinengestell 2 befestigt sein kann, wenn die Antriebseinrichtung 6 in drei Raumrichtungen verfahrbar ist. Bevorzugt ist der Tisch 27 aber zumindest in einer Raumrichtung linear verlagerbar. Bei dieser Konstellation braucht die Antriebseinrichtung 6 nur in zwei Raumrichtungen verlagert werden zu können.

Die Spanneinrichtung 3 besitzt einen Spannbackenträger 26, der um eine Horizontalachse 9 schwenkbar gelagert ist. Zur Lagerung des Spannbackenträgers 26 dienen zwei Lagergehäuse 22, 23, in denen sich auch ein Antrieb befindet, um den Spannbackenträger 26 zwischen verschiedenen Bearbeitungsstellungen bzw. einer Ent-/Beladestellung hin und her zu schwenken und um ihn in den Stellungen zu halten.

Der Spannbackenträger 26 trägt insgesamt sechs in gleichmäßiger Winkelverteilung um die Schwenkachse 9 angeordnete Sockel, die wiederum jeweils zwei von einem in einem Gehäuse 16 angeordneten Spannbackenantrieb verfahrbare Backenträger 14, 15 tragen. Jeder der beiden Backenträger 14, 15 trägt eine Spannbacke 4, 5 zum Einspannen des Schließbartes 11 des Schlüssels 1. Die Spannbacke 4 besitzt eine Spannfläche 4' und eine Auflagefläche 18, auf die eine der beiden Breitseiten des Schlüsselrohlings 1 aufgelegt werden kann. Die Auflagefläche 18 besitzt ein konträres Profil zur Schlüsselbreitseite, die auf der Auflagefläche 18 zur Auflage kommt. Eine feste Spannbacke 4 wirkt mit einer beweglichen Spannbacke 5 zusammen. Es ist aber auch möglich, dass beide Spannbacken 4, 5 als Zentrumsspanner beweglich sind. Der Spannbackenträger 26 kann aber auch mehr als sechs Sockel tragen, die jeweils Spannbacken 4, 5 tragen. So können bspw. acht oder mehr voneinander verschiedene Spannbackenanordnungen vorgesehen sein.

Die Auflagefläche 18 wird bereichsweise von einem Abschnitt der anderen Spannbacke 5 überlappt, der eine Spannfläche 5' aufweist, die parallel zur Spannfläche 4' verlaufen kann, bzw. bevorzugt in einem Negativwinkel dazu verläuft.

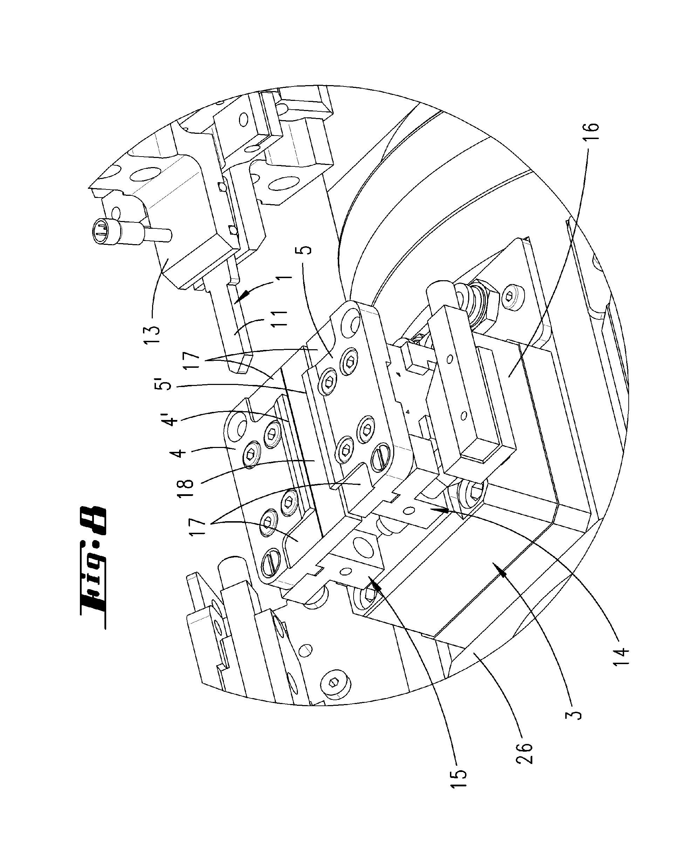

Die Fig. 8 zeigt, wie ein am Schließbart 11 von zwei Greifzangenarmen 13 eines Greifarms 12 gefasster Schlüssel in Richtung der Spannbackenanordnung 4, 5 transportiert wird, um auf die Auflagefläche 18 abgelegt zu werden. Dabei findet die Reide 10 des Schlüssels Aufnahme in einer Ausnehmung 17 der Spannbacken 4, 5. Die Greifzange 13 des Greifarms 12 greift dabei am Kopf des Schlüsselrohlings an.

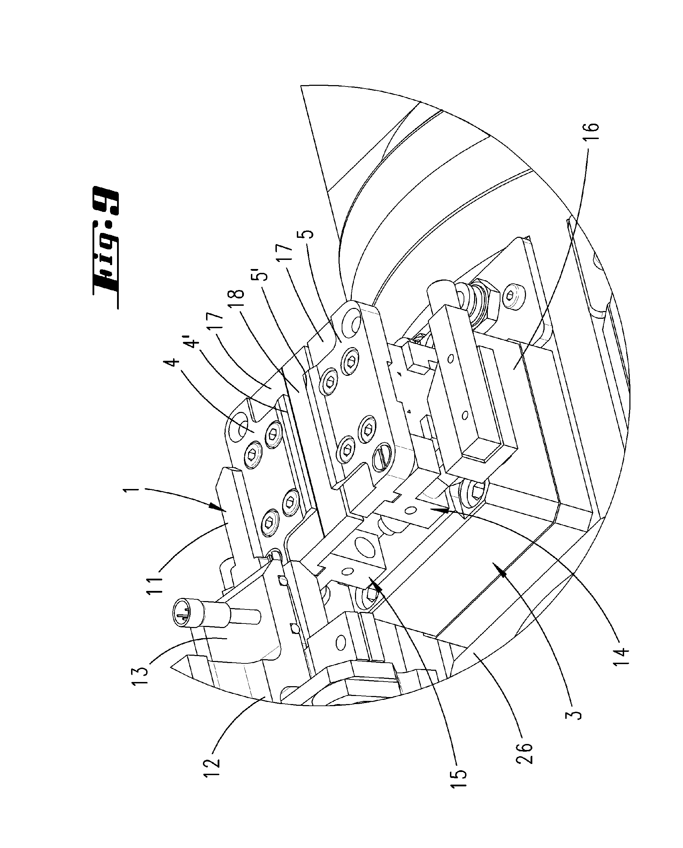

Die Spannbacken 4, 5 besitzen eine weitere, der Ausnehmung 17 gegenüberliegend angeordnete Ausnehmung 17', in die ebenfalls die Reide 10 eines Schlüsselrohlings eingelegt werden kann, wenn dieser gemäß Fig. 9 eingespannt werden soll.

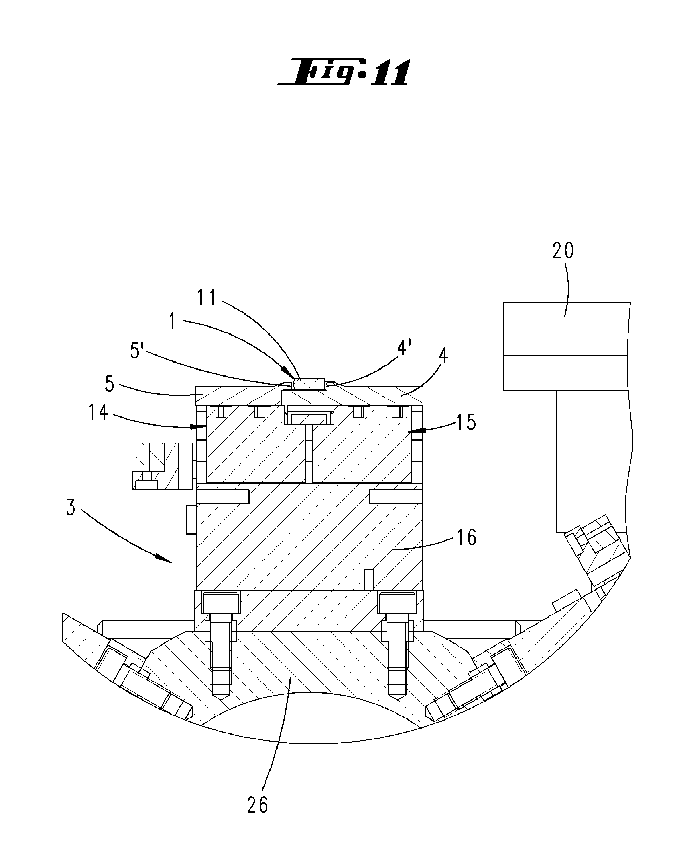

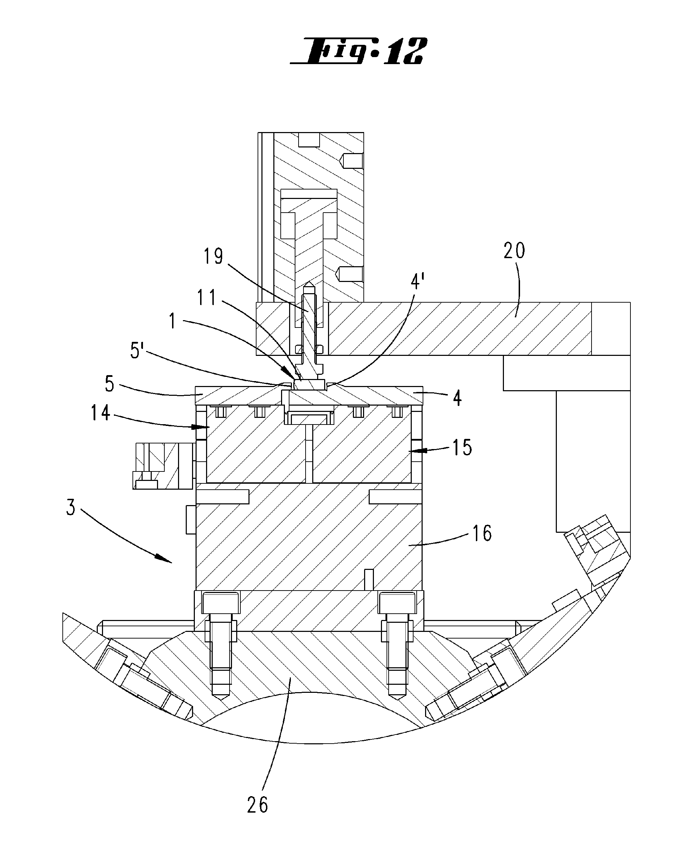

Nachdem der Schlüsselrohling in der in Fig. 11 dargestellten Stellung in die in der Horizontalebene liegende Spannbackenanordnung 4, 5 eingelegt worden ist, kommt der in Fig. 12 dargestellte Niederhalter zur Wirkung, der die nach außen weisende Schlüsselschaftbreitseite mit einem Stempel 19 beaufschlagt, der von einem Antrieb, bspw. einem pneumatischen Antrieb, angetrieben wird und der am Ende eines schwenkbar am Gehäuse 23 angeordneten Niederhalterarm 20 sitzt. Der Niederhalter übt eine Andrückfunktion auf die Schlüsselschaftbreitseite aus, damit die gegenüberliegende Schlüsselbreitseite flächig auf der Auflagefläche 18 aufliegt.

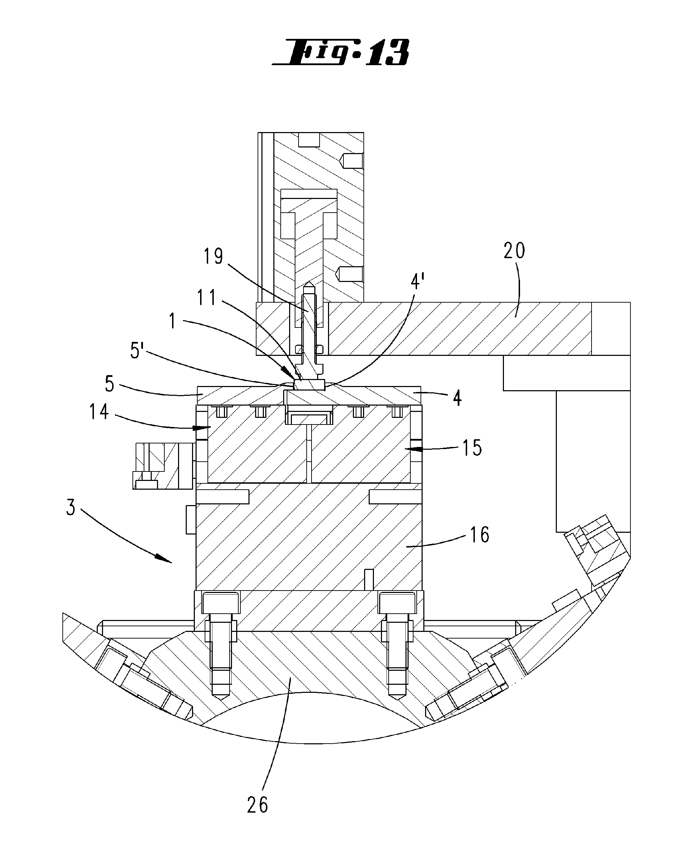

Die Fig. 13 zeigt eine Folgedarstellung der Fig. 12, wobei bei mit dem Stempel 19 beaufschlagtem Schlüssel die Spannbacken 4, 5 geschlossen worden sind.

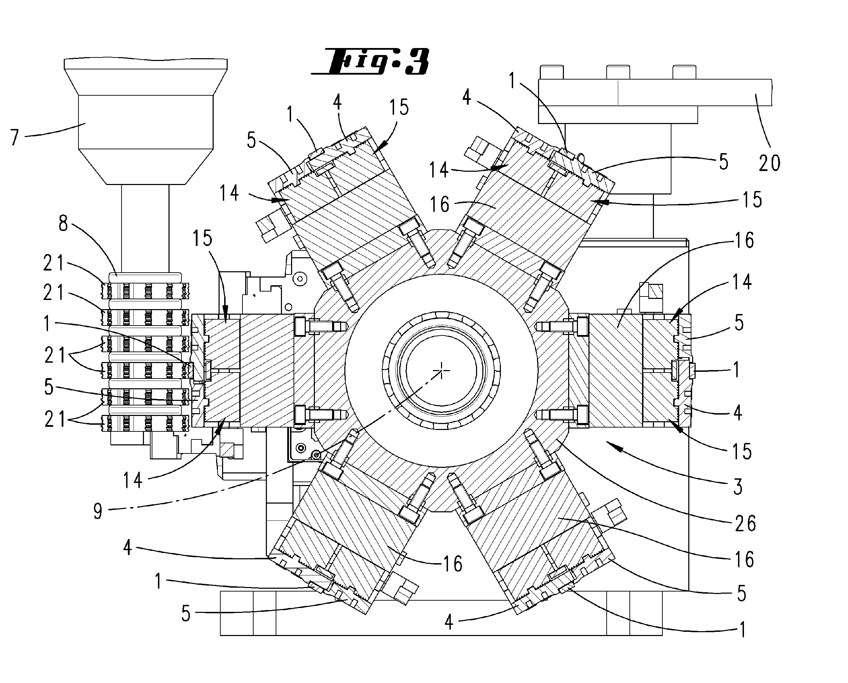

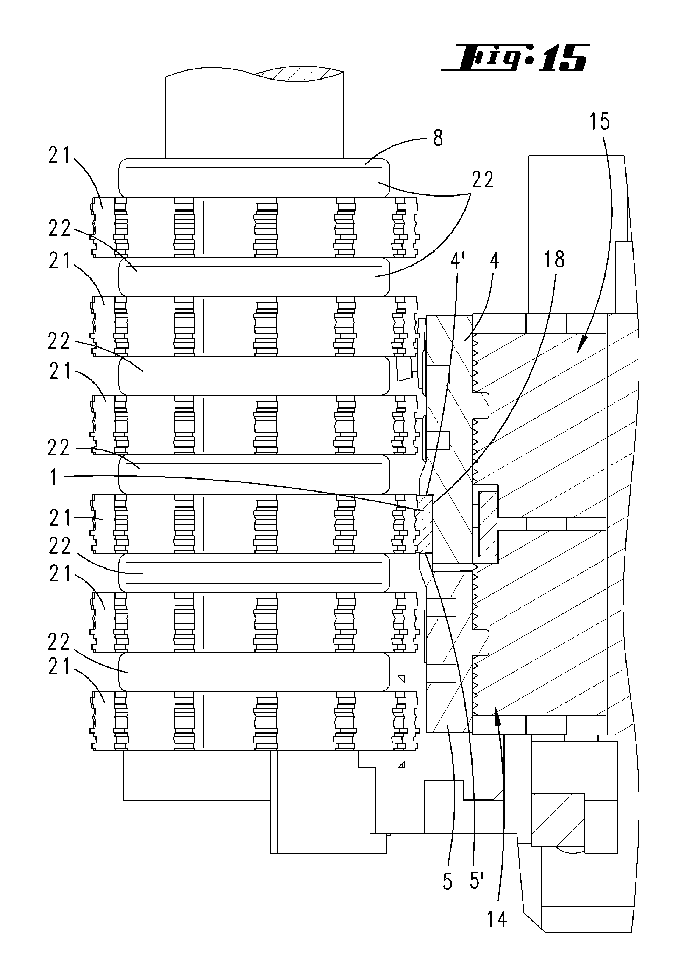

Um eine erste Breitseite des Schlüsselschaftes 11 zu profilieren, wird der Spannbackenträger 26 verschwenkt bis eine mit einem Rohling 1 beladene Spannbackenanordnung 4, 5 eine Vertikalstellung erreicht, wie sie in den Fig. 3 und 15 dargestellt ist. Durch eine Horizontalverlagerung des Profilfräsers 8 wird mit einem seiner Frässcheiben 21 ein Längsprofil in den Schließbart 11 eingefräst. Dabei wird die in der Vertikalen liegende Drehachse des Profilfräsers 8 in Horizontalrichtung verlagert. Die Bearbeitung kann auch in einer geneigten Stellung zur Drehachse erfolgen. Die Frässcheiben 21 können variabel auf einem Schaft angeordnet sein. Sie sind dann mit Distanzscheiben voneinander beabstandet. Es können mehrere Frässcheiben 21 in beliebiger Reihenfolge dort angeordnet werden. Am freien Ende des Schaftes kann eine Entgratbürste vorgesehen sein.

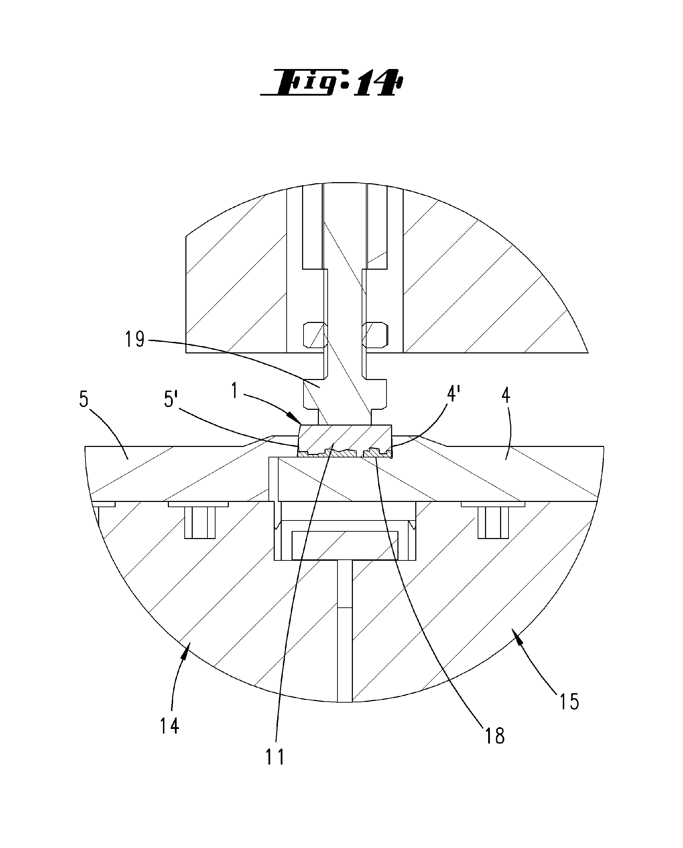

Nach einem Umspannen des Schlüsselrohlings 1 um 180° wird die gegenüberliegende Schlüsselbreitseite profiliert. Hierzu wird eine andere Spannbackenanordnung 4, 5 verwendet, bspw. diejenige, die in Fig. 14 dargestellt ist, bei der die Auflagefläche 18 ein Negativprofil zum bereits gefertigten ersten Breitseitenprofil aufweist.

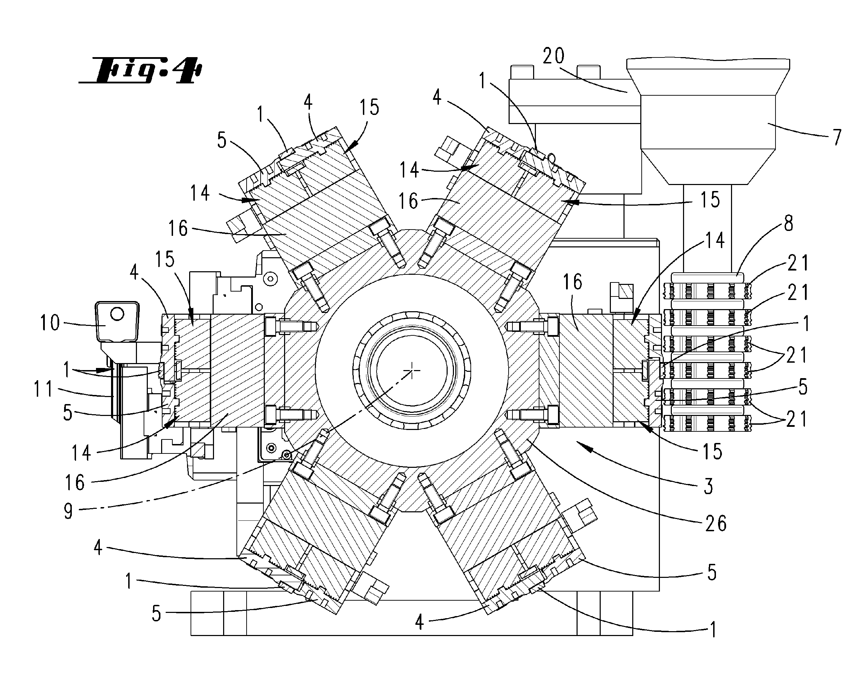

Die Fig. 4 zeigt eine mögliche zweite Bearbeitungsstellung, in der ein anderes Profil eingefräst werden kann. Gegenüber der in Fig. 3 dargestellten ersten Bearbeitungsstellung ist die Spannbackenanordnung 4, 5 um 180° gegenüber der Schwenkachse 9 verschwenkt worden. Auch hier liegt der Rohling 1 in einer Vertikalebene.

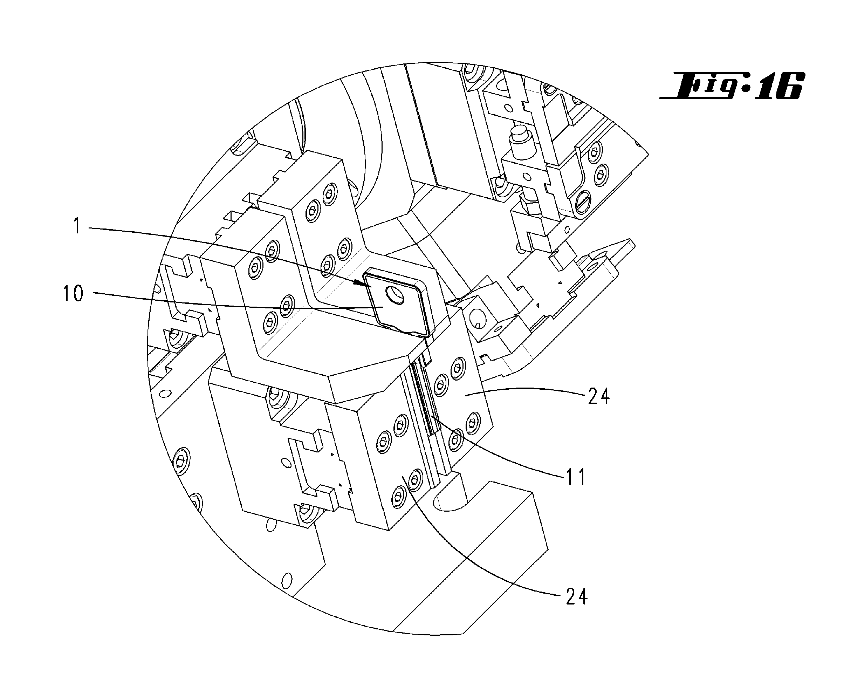

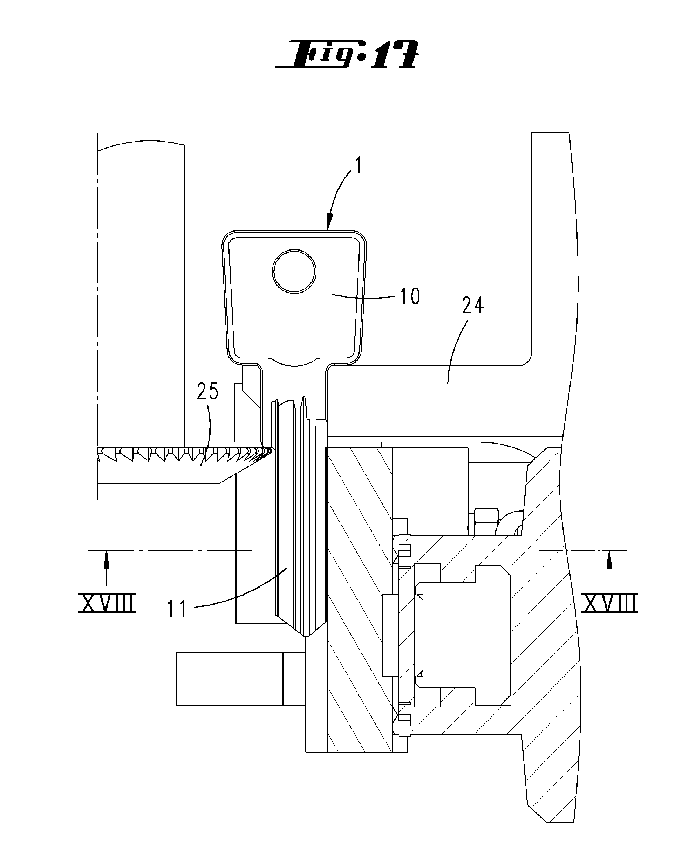

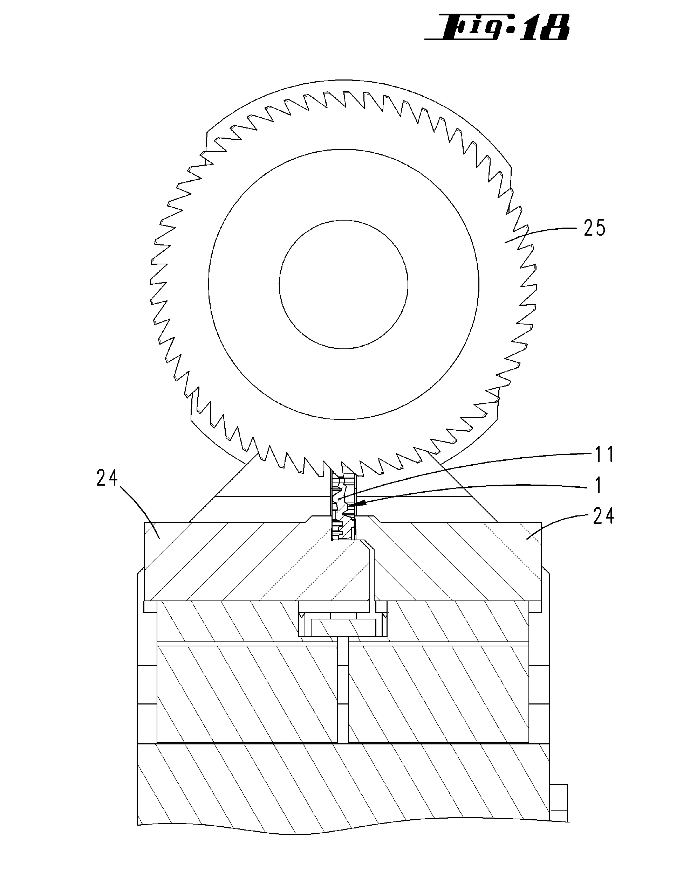

Mit den insbesondere in den Fig. 16 bis 18 dargestellten Spannbacken 24 kann ein fertig profilierter Schlüssel gespannt werden, wobei die Spannbacken 24 die Breitseitenebenen des Schlüssels zwischen sich einspannen. Ein Teil des Schließbartes 11 ragt über die Oberseite der Spannbacken 24 hinaus und kann mit dem in den Fig. 17 und 18 dargestellten Schneidrad 25 bearbeitet werden. Mit dem Schneidrad 25 werden unterschiedlich tiefe Profilkerben in die Schlüsselbrust eingeschnitten.

Wird ein brustseitig einzuschneidender Flachschlüssel mit der zuvor beschriebenen Vorrichtung gefertigt, so wird der Rohling mit dem Greifarm 12 derart auf die Auflagefläche 18 gelegt, dass der Rücken des Schlüsselschaftes 1 an der festen Spannbacke anliegt. Die bewegliche Spannbacke wird dann gegen die Schlüsselbrust verlagert. Der einseitig profilierte Schlüsselrohling wird dann mit dem Greifarm aus der Backenanordnung genommen und in eine andere Backenanordnung gelegt, deren Auflagefläche 18 ein Negativprofil zum bereits gefertigten Schlüsselprofil aufweist. Im Ausführungsbeispiel besitzt eine Spannbacke eine ebene Auflagefläche 18 und die übrigen fünf Spannbackenanordnungen Auflageflächen 18, die unterschiedlich profiliert sind, so dass unterschiedlich profilierte Schlüssel gefertigt werden können.

Zum Profilieren der zweiten Schlüsselschaftbreitseite wird der Schlüsselrohling wiederum mit seinem Rücken gegen die feste Spannbacke gelegt.

Zur Fertigung von Wendeflachschlüsseln, bei denen in die profilierten Schlüsselbreitseiten Bohrmulden eingebracht werden, kann ein Zentrumsspanner verwendet werden. Die Bohrmulden werden bevorzugt in einer Betriebsstellung der Spannbackenanordnung 4, 5 eingebracht, in der die Schlüsselbreitseite in einer Horizontalebene liegt. Es kann sich somit um die Beladestellung handeln. Der Bohrer bzw. Fingerfräser, mit dem die Bohrmulden gefertigt werden, wird anstelle des Profilfräsers 8 im Spannfutter 7 der Antriebseinrichtung 6 gespannt. Zum Austausch der Werkzeuge ist ein Werkzeugwechselsystem vorgesehen.

Die Bohrmulden können nicht nur in einer Position des Rohlings gefertigt werden, in der die Schlüsselbreitseite in einer Horizontalebene liegt. Mit der erfindungsgemäßen Vorrichtung ist es auch möglich, die Spannbackenanordnung um einen gewissen Winkel von bspw. 30° zu verschwenken, so dass die Schlüsselbreitseitenebene aus der Horizontalebene verschwenkt ist. In dieser Neigungsstellung können geneigte Bohrmulden gefertigt werden.

Die drehangetriebenen Werkzeuge können nicht dargestellte Entgratbürsten aufweisen, mit denen nach der Spanbearbeitung das Werkstück, also der Schlüssel, entgratet werden kann.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

- 1: Schlüsselrohling
- 2: Maschinengestell
- 3: Spanneinrichtung
- 4: Spannbackenanordnung
- 5: Spannbackenanordnung
- 6: Antriebseinrichtung
- 7: Spannfutter
- 8: Profilfräser
- 9: Schwenkachse
- 10: Reide
- 11: Bart
- 12: Greifarm
- 13: Greifzange
- 14: Backenträger
- 15: Backenträger
- 16: Gehäuse
- 17: Ausnehmung für Reide
- 18: Auflagefläche
- 19: Niederhalter
- 20: Niederhalterarm
- 21: Frässcheibe
- 22: Lager
- 23: Gehäuse
- 24: Spannbacken
- 25: Schneidrad
- 26: Spannbackenträger
- 27: Tisch

## Patentansprüche

1. Vorrichtung zum Fertigen von Flachschlüsseln mit einer mindestens eine Spannbackenanordnung (4, 5) zur Halterung eines Schlüsselrohlings (1) aufweisenden, gegenüber dem Maschinengestell (2) verlagerbaren Spanneinrichtung (3) und einer Antriebseinrichtung (6) mit einem Spannfutter (7) zur Aufnahme eines Profilfräsers (8), insbesondere Schaft- oder Scheibenfräsers zur Breitseitenprofilierung des Schlüsselrohlings (1), wobei die Vorrichtung ein mindestens drei CNC-gesteuerte Achsen aufweisendes Bearbeitungszentrum ist, um zumindest die Breitseitenprofilierung zu fertigen, **dadurch gekennzeichnet, dass** die Spanneinrichtung (3) eine vertikale Schwenkachse (9) aufweist, um die mehreren, revolverartig um die Schwenkachse (9) angeordneten Spannbackenanordnungen (4, 5) von einer Be-/Entladestellung in eine Bearbeitungsstellung und/oder von einer ersten Bearbeitungsstellung in eine zweite Bearbeitungsstellung zu schwenken, wobei die Spannbackenanordnung (4, 5) in der Be-/Entladestellung in einer Horizontalebene liegt und in der bzw. den Beabreitungsstellung(en) in einer Vertikalstellung liegt.

2. Vorrichtung nach Anspruch 1 oder insbesondere danach, **dadurch gekennzeichnet, dass** die Antriebseinrichtung (6) bzw. die Spanneinrichtung (3) zwecks Vorschub zur Fertigung der Breitseitenprofilierung bezogen auf das Maschinengestell (2) insbesondere in den drei Raumrichtungen verlagerbar ist.

3. Vorrichtung nach einem oder mehreren der vorhergehenden Ansprüche oder insbesondere danach, **dadurch gekennzeichnet, dass** die Vorrichtung Mittel aufweist, um die schlüsselbrustseitigen Einschnitte oder Bohrmulden in die Schlüsselbreitseite zu fertigen.

4. Vorrichtung nach einem oder mehreren der vorhergehenden Ansprüche oder insbesondere danach, **dadurch gekennzeichnet, dass** die Spanneinrichtung (3) auf einem gegenüber dem Maschinengestell (2) zumindest in einer CNC-Achse verlagerbaren Tisch (27) befestigt ist.

5. Vorrichtung nach einem oder mehreren der vorhergehenden Ansprüche oder insbesondere danach, **dadurch gekennzeichnet, dass** die Drehachse der Antriebseinrichtung (6) eine Vertikalachse ist.

6. Vorrichtung nach einem oder mehreren der vorhergehenden Ansprüche oder insbesondere danach, **dadurch gekennzeichnet, dass** zur Fertigung spiegelsymmetrischer Profile der Schlüsselrohling (1) in zumindest zwei voneinander verschiedenen Ausrichtungen in der Spannbackenanordnung (4, 5) spannbar ist, wobei die Schlüsselreiden (10) in entgegengesetzte Richtungen weisen.

7. Vorrichtung nach einem oder mehreren der vorhergehenden Ansprüche oder insbesondere danach, **dadurch gekennzeichnet, dass** eine Spannbackenanordnung (4, 5) eine Auflagefläche (18) mit einer zum Breitseitenprofil des Schlüssels konträren Profilierung aufweist.

8. Vorrichtung nach einem oder mehreren der vorhergehenden Ansprüche oder insbesondere danach, **dadurch gekennzeichnet, dass** die Spannbackenanordnung (4, 5) zwei aufeinander zu weisende Spannflächen (4', 5') aufweist, zwischen die der Schlüsselrohling (1) mit einer Greifzange (13) bringbar ist, so dass die Schmalseiten des Schlüsselbartes gespannt werden, wobei ein Niederhalter (19) vorgesehen ist, um die Schlüsselbreitseite gegen eine Auflagefläche (18) während des Spannens zu drücken.

9. Vorrichtung nach einem oder mehreren der vorhergehenden Ansprüche oder insbesondere danach, **gekennzeichnet durch** eine zweite Spannbackenanordnung (24) zum Einspannen der sich gegenüberliegenden Schlüsselbreitseiten und ein Schneidrad (25) zum Einschnitt einer Schmalseitenprofilierung des Schlüsselbartes in Form von Schließkerben.

10. Vorrichtung nach einem oder mehreren der vorhergehenden Ansprüche oder insbesondere danach, **dadurch gekennzeichnet, dass** zur Fertigung von Bohrmulden in der Schlüsselbreitseite der Schaft- oder Scheibenfräser gegen einen Bohrer oder Fingerfräser austauschbar ist.

11. Vorrichtung zum Fertigen von Flachschlüsseln mit einer mindestens eine Spannbackenanordnung (4, 5) zur Halterung eines Schlüsselrohlings (1) aufweisenden, gegenüber dem Maschinengestell (2) verlagerbaren Spanneinrichtung (3) und einer Antriebseinrichtung (6) mit einem Spannfutter (7) zur Aufnahme eines Profilfräsers (8), insbesondere Schaft- oder Scheibenfräsers zur Breitseitenprofilierung des Schlüsselrohlings, **dadurch gekennzeichnet, dass** der Schlüsselrohling (1) zur Fertigung spiegelsymmetrischer Profile in zumindest zwei voneinander verschiedenen Ausrichtungen in der Spannbackenanordnung (4, 5) spannbar ist, wobei die Schlüsselreiden (10) in entgegengesetzte Richtung weisen.

12. Vorrichtung zum Fertigen von Flachschlüsseln mit einer mindestens eine Spannbackenanordnung (4, 5) zur Halterung eines Schlüsselrohlings (1) aufweisenden, gegenüber dem Maschinengestell (2) verlagerbaren Spanneinrichtung (3) und einer Antriebseinrichtung (6) mit einem Spannfutter (7) zur Aufnahme eines Profilfräsers (8), insbesondere Schaft- oder Scheibenfräsers zur Breitseitenprofilierung des Schlüsselrohlings, **dadurch gekennzeichnet, dass** die Anlagefläche (18) der Spannbackenanordnung (4, 5) eine zum Breitseitenprofil des Schlüssels konträre Profilierung aufweist.

13. Vorrichtung zum Fertigen von Flachschlüsseln mit einer mindestens eine Spannbackenanordnung (4, 5) zur Halterung eines Schlüsselrohlings (1) aufweisenden, gegenüber dem Maschinengestell (2) verlagerbaren Spanneinrichtung (3) und einer Antriebseinrichtung (6) mit einem Spannfutter (7) zur Aufnahme eines Profilfräsers (8), insbesondere Schaft- oder Scheibenfräsers zur Breitseitenprofilierung des Schlüsselrohlings, **dadurch gekennzeichnet, dass** die Spannbackenanordnung (4, 5) zwei aufeinander zu weisende Spannflächen (4', 5') aufweist, zwischen die der Schlüsselrohling (1) mit einer Greifzange (13) bringbar ist, so dass die Schmalseiten des Schlüsselbartes des Schlüsselrohlings (1) gespannt werden, wobei ein Niederhalter (19) vorgesehen ist, um die Schlüsselbreitseite gegen eine Auflagefläche (18) während des Spannens zu drücken.

14. Verfahren zur Herstellung von Flachschlüsseln mit einer Vorrichtung, insbesondere nach einem oder mehreren der vorhergehenden Ansprüche, wobei der Schlüsselrohling (1) in einer Be-/Entladestellung mit der Spannbackenanordnung (4, 5) gespannt wird, die Spannbackenanordnung (4, 5) anschließend in eine Bearbeitungsstellung geschwenkt wird, in welcher die Schlüsselbreitseite des Rohlings (1) profiliert wird.

15. Verfahren, insbesondere nach einem oder mehreren der vorhergehenden Ansprüche, wobei in einer Bearbeitungsstellung zunächst die Schlüsselbreitseite des Rohlings (1) profiliert wird und anschließend in derselben Vorrichtung schlüsselbrustseitige Einschnitte oder Bohrmulden in der Schlüsselbreitseite gefertigt werden.
